# EUROPÄISCHE PATENTSCHRIFT

(11) **EP 1 871 566 B1**
(45) Veröffentlichungstag und Bekanntmachung des Hinweises auf die Patenterteilung: **05.10.2011**
(21) Anmeldenummer: 06725207.2
(22) Anmeldetag: 21.03.2006
(51) Int. Cl.: B23K 26/06, B23K 26/00

(54) **VERFAHREN ZUM FEINPOLIEREN/-STRUKTURIEREN WÄRMEEMPFLINDLICHER DIELEKTRISCHER MATERIALIEN MITTELS LASERSTRAHLUNG**
METHOD FOR FINELY POLISHING/STRUCTURING THERMOSENSITIVE DIELECTRIC MATERIALS BY A LASER BEAM
PROCEDE DE POLISSAGE FIN/STRUCTURATION DE MATIERES DIELECTRIQUES THERMOSENSIBLES AU MOYEN D'UN RAYONNEMENT LASER

(30) Priorität: 22.04.2005 DE 102005020072
(43) Veröffentlichungstag der Anmeldung: 02.01.2008
(73) Patentinhaber: Forschungsverbund Berlin e.V., 12489 Berlin (DE)
(72) Erfinder: EHRENTRAUT, Lutz, 12557 Berlin (DE); HERTEL, Ingolf, 14129 Berlin (DE); ROSENFELD, Arkadi, 10409 Berlin (DE)
(74) Vertreter: Hengelhaupt, Jürgen
(86) Internationale Anmeldenummer: PCT/EP2006/060921
(87) Internationale Veröffentlichungsnummer: WO 2006/111446

(56) Entgegenhaltungen:
- EP-A- 1 260 838
- WO-A-03/049155
- DE-A1- 10 228 743
- US-A1- 2005 032 249
- KUHN A ET AL: "PREPARATION OF FIBER OPTICS FOR THE DELIVERY OF HIGH-ENERGY HIGH-BEAM-QUALITY ND:YAG LASER PULSES" APPLIED OPTICS, OSA, OPTICAL SOCIETY OF AMERICA, WASHINGTON, DC, US, Bd. 39, Nr. 33, 20. November 2000 (2000-11-20), Seiten 6136-6143, XP000980950 ISSN: 0003-6935 in der Anmeldung erwähnt
- STOIAN R ET AL: "COULOMB EXPLOSION IN ULTRASHORT PULSED LASER ABLATION OF AL2O3" PHYSICAL REVIEW, B. CONDENSED MATTER, AMERICAN INSTITUTE OF PHYSICS. NEW YORK, US, Bd. 62, Nr. 19, 15. November 2000 (2000-11-15), Seiten 13167-13173, XP008064279 ISSN: 0163-1829 in der Anmeldung erwähnt
- BULGAKOVA N M ET AL: "MODEL DESCRIPTION OF SURFACE CHARGING DURING ULTRA-FAST PULSED LASER ABLATION OF MATERIALS" APPLIED PHYSICS A: MATERIALS SCIENCE AND PROCESSING, SPRINGER VERLAG, BERLIN, DE, Bd. A79, 2004, Seiten 1153-1155, XP008064275 ISSN: 0947-8396 in der Anmeldung erwähnt
- STOIAN R ET AL: "SURFACE CHARGING AND IMPULSIVE ION EJECTION DURING ULTRASHORT PULSED LASER ABLATION" PHYSICAL REVIEW LETTERS, NEW YORK,NY, US, Bd. 88, Nr. 9, 4. März 2002 (2002-03-04), Seiten 97603-1, XP008064278 ISSN: 0031-9007 in der Anmeldung erwähnt

## Beschreibung

Die Erfindung betrifft ein Verfahren zum Feinpolieren/-strukturieren eines wärmeempfindlichen dielektrischen Materials mittels Laserstrahlung, bei dem intensive ultrakurze Laserpulse auf eine zu bearbeitende Oberfläche des Materials gerichtet werden und die Einwirkzeit der Laserpulse auf die Oberfläche im Bereich von 10⁻¹³ s bis 10⁻¹¹ s und die Fluenz der Laserpulse unterhalb der Schwelfluenz, die für eine Ablation des Materials notwendig wäre, eingestellt wird. Das Dokument EP 1 260 838 A offenbart ein solches Verfahren..

Die Ultrapräzisionstechnik umfasst Bearbeitungsverfahren, bei denen Körper und Oberflächen mit makroskopischen Abmessungen extrem präzise in Form und Glattheit hergestellt werden. Je präziser geglättet und geformt Oberflächen sind, desto bessere optische Eigenschaften weisen sie auf. Dabei muss jedoch die Bearbeitung von verschiedensten Materialien erforscht werden, da das Spektrum der optisch nutzbaren Wellenlängen sehr breit ist. Neben immer glatter und formgenauer herzustellenden Linsen für den sichtbaren Bereich werden zunehmend Optiken für den Infrarot- und auch den UV- und Röntgenbereich gefordert. Hierzu ist eine zunehmende Perfektionierung der Polierkunst aus einer Kombination konventioneller und total neuer Produktionsverfahren notwendig.

Neben den klassischen mechanischen Verfahren sind heute im Wesentlichen zwei Verfahren bekannt, die Strahlungen zum Polieren von Materialien nutzen.

Einerseits ist es das eingeführte Verfahren mit Ionenstrahlen zur Feinpolitur dielektrischer Materialien, andererseits das Verfahren mit CO₂-Lasern. Daneben existiert seit einiger Zeit ein Verfahren zum Polieren von Metallen mit YAG-Lasern.

Bei beiden Laserverfahren wird das kurzzeitige Aufschmelzen der Oberfläche genutzt, um Unebenheiten zu glätten und so einen Politureffekt zu erreichen. Dabei ist die Energiedichte an der Oberfläche so zu wählen, dass kein destruktiver Abtrag erfolgt, sondern nur ein Aufschmelzen und Verdampfen mikroskopisch kleiner Spitzen. Mit CO₂-Lasern werden z. B. Faserenden von Lichtwellenleitern zum Übertragen hoher Laserleistungen bearbeitet, beispielsweise beschrieben in Appl. Optics Vol. 39, No. 33, 20. November 2000, 6136-6143. Mit dem YAG-Laser werden komplizierte Metallformen poliert (s. z. B. DGM AKTUELL 2001, 3, No.12 "Licht poliert Metall" und/oder DE 102 28 743 A1), wofür früher zum großen Teil Handarbeit notwendig war. Diese beiden Laserverfahren eignen sich aufgrund des Aufschmelzverfahrens jedoch nicht für Materialien, die temperaturempfindlich sind wie z. B. Zerodur, bei denen die Glättung der Oberfläche nur mit einem unwesentlichen Temperaturanstieg einhergehen darf.

Deshalb werden zur Feinpolitur solcher Materialien z. Z. Ionenstrahlen benutzt. Von Nachteil ist hierbei u.a. die Notwendigkeit einer Vakuumapparatur, die um so aufwendiger wird, je größer die zu bearbeitenden Bauteile werden.

Aufgabe der Erfindung ist es deshalb, ein Verfahren zum Feinpolieren/- strukturieren wärmeempfindlicher dielektrischer Materialien, insbesondere mit einem geringen Wärmeausdehnungskoeffizienten, mittels Laserstrahlung anzugeben.

Die Aufgabe wird erfindungsgemäß durch ein Verfahren gemäß dem Anspruch 1 gelöst.

Mit dem erfindungsgemäßen Verfahren wird ein Materialabtrag im Nanometerbereich mit ultrakurzen Laserpulsen im Pikosekunden- und Subpikosekunden-Bereich ermöglicht, wobei während eines präablativen Verfahrensschritts (Abtrag unterhalb der Ablationsschwelle) die Materialoberfläche fein poliert wird. Aufgrund der extrem kurzen Einwirkzeit der Laserstrahlung auf die zu bearbeitende Oberfläche findet eine sehr kleine Erwärmung statt, die nur im Bereich von einigen 10 Grad liegt. Deshalb kann man auch bei dem erfindungsgemäßen Verfahren von einem kalten Bearbeitungsverfahren sprechen. Dieses Verfahren wird an Luft durchgeführt, d. h. es sind keine aufwendigen Vakuumapparaturen notwendig, wodurch auch eine Online-Kontrolle des Probenabtrags ermöglicht wird.

Bei der erfindungsgemäßen Lösung wird der Effekt der so genannten Coulombexplosion ausgenutzt (beispielsweise beschrieben in Phys. Rev. B 62 (2000) 13167-13173; Phys. Rev. Letters 88, (2002) 097603; Appl. Phys. A 79 (2004) 1153-1155). Bei diesem Effekt wird bei Einwirkung intensiver ultrakurzer Laserstrahlung auf die Oberfläche Material nur im oberflächennahen Bereich (0,1 bis einige wenige nm) ausgeworfen. Dabei werden durch Photoionisation Elektronen von der Oberfläche emittiert und zwar infolge der hohen Laserintensität so viele, dass die verbleibenden Ionen im oberflächennahen Bereich einem solch hohen elektrostatischen Stress unterliegen, dass es zu einer Ablösung dieser Ionen kommt.

Zur Einstellung der notwendigen Energiedichte ist in einer Ausführungsform vorgesehen, dass die Fluenz der Laserstrahlung auf der zu bearbeitenden Oberfläche zwischen 70 % und 95 % der Schwellfluenz eingestellt wird. Dies kann z. B. dadurch erfolgen, dass die zu bearbeitende Oberfläche vor dem Fokus des Laserstrahls angeordnet wird.

In einer anderen Ausführungsform wird die zu bearbeitende Oberfläche mit dem Laserstrahl abgescant. Dies ist mit bekannten Mitteln relativ einfach durchführbar, da das erfindungsgemäße Verfahren an Luft arbeitet.

Die Erfindung soll nun in einem Ausführungsbeispiel an Hand von Zeichnungen näher erläutert werden.

Dabei zeigen:
- Fig. 1: schematisch das Prinzip eines Ausführungsbeispiels der Erfindung;
- Fig. 2: die Oberfläche nach der Bearbeitung mit dem erfindungsgemäßen Verfahren.

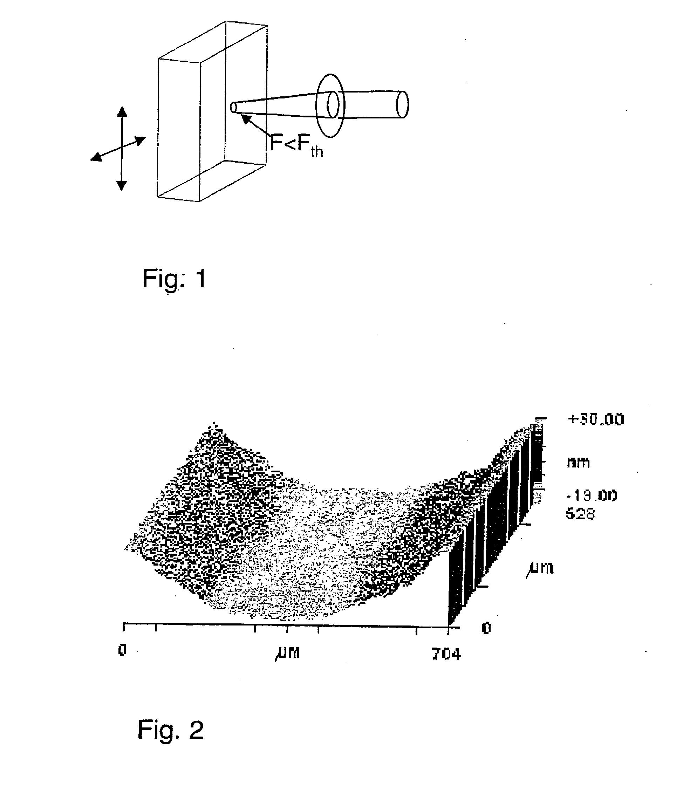

In dem Ausführungsbeispiel wurde die Oberfläche von Zerodur mit dem erfindungsgemäßen Verfahren bearbeitet. Hierbei wurde der Laserstrahl mit Hilfe einer Linse in Probenrichtung fokussiert, wobei sich die Probenoberfläche vor dem Fokus befand, wie in Fig. 1 dargestellt. Die Lage der Probenoberfläche wurde dabei so gewählt, dass die Fluenz **F** ca. 70 bis 95 % der Schwellfluenz **F**ₜₕ betrug. Eine Positionierung hinter dem Fokus ist nicht möglich, da aufgrund der hohen Laserintensitäten ein Plasmadurchbruch in der Luft im Fokusbereich erfolgt, der zur Zerstörung des Strahlprofils und zum Energieverlust führt. In den Laserstrahl wurde weiterhin eine Rechteckblende eingesetzt, um annähernd ein Tophat-Profil zu simulieren. Zwar entstanden auch Modifikationen im Innern der Probe (Störstellen), jedoch waren diese so tief, dass sie keine Auswirkungen auf die Probenoberfläche hatten. Dieses Tophat-Profil wurde deshalb gewählt, weil der Abtrag in einem Scanningverfahren sich als aussichtsreicher bezüglich der zu erzielenden geringeren Rauhigkeiten als in einem Abbildungsverfahren erwies. In diesem Ausführungsbeispiel wird nun die Probenoberfläche streifenweise mit dem Laserstrahl abgefahren und Streifen an Streifen gesetzt. Da der Überlapp der Streifen beim Ausgangsprofil (Gaußprofil) des Ultrakurzpulslasers nicht ausreichend bezüglich der Rauhigkeit der Probenobenfläche war, wurde ebenfalls dieses angenäherte Tophat-Profil verwendet.

Ein derartiges Tophat-Profil kann aber auch durch ein steuerbares diffraktometrisches optisches Element (DOE) erzeugt werden bzw. es wird ein solches DOE eingesetzt, dass ein gewünschtes Tophat-Profil gleich auf die zu bearbeitende Oberfläche produziert.

Als Lasersystem wurde ein kommerzielles verstärktes TiSa-System mit einer Pulsbreite von 50 fs bei einer Wellenlänge von 800 nm eingesetzt. Eine Wellenlängenvariation wurde bisher nicht durchgeführt, wobei als mögliche Wellenlänge nur die Wellenlänge der zweiten Harmonischen (ca. 400 nm) der Ausgangsstrahlung in Frage kommt, da nur hier eine möglicherweise ausreichende Energie zur Verfügung steht.

Die Fig. 2 zeigt einen breiten mit dem erfindungsgemäßen Verfahren unterhalb der Ablationsschwelle abgetragenen Streifen, der mit einer Verfahrgeschwindigkeit von 0,1 mm/s hergestellt wurde. Die Fluenz **F** betrug hierbei ca. 80 % der Schwellfluenz, d. h. dem Fluenzwert, der für eine Ablation des Materials notwendig wäre, und ist gleich 1,6 J/cm². Die Probe befand sich in 3,9 mm Abstand zum Fokus einer 50 mm-Linse. Die Laserenergie pro Puls betrug nach der Rechteckblende 0,9 mJ und die Folgefrequenz des Lasers lag bei 700 Hz. Das bedeutet, dass während des erfindungsgemäßen Verfahrens ca. 500 Pulse auf annähernd denselben Probenort fallen. Es wurden 20 Linien nebeneinander gezogen, die einen Abstand von jeweils Δz = 70 µm zueinander aufwiesen. Die Figur zeigt einen gleichmäßigen homogenen Abtrag, einzelne Linien sind nicht zu erkennen. Natürlich können auch mehr Linien nebeneinander gesetzt werden. Das Ergebnis ist dann ein Abtrag über die gesamte Fläche der Probe. Die Rauheit der mit dem erfindungsgemäßen Verfahren bearbeiteten Oberfläche betrug rms-Rauheit = 1 ± 0,15 nm.

## Patentansprüche

1. Verfahren zum Feinpolieren/-strukturieren eines wärmeempfindlichen dielektrischen Materials mittels Laserstrahlung, bei dem intensive ultrakurze Laserpulse auf eine zu bearbeitende Oberfläche des Materials gerichtet werden und
die Einwirkzeit der Laserpulse auf die Oberfläche im Bereich von 10⁻¹³ s bis 10⁻¹¹ s und die Fluenz der Laserpulse unterhalb der Schwellfluenz, die für eine Ablation des Materials notwendig wäre, aber ausreichend für das Entstehen einer Coulombexplosion eingestellt wird.

2. Verfahren nach Anspruch 1, bei dem
die Fluenz der Laserstrahlung auf der zu bearbeitenden Oberfläche zwischen 70 % und 95 % der Schwellfluenz eingestellt wird.

3. Verfahren nach Anspruch 2, bei dem
die zu bearbeitende Oberfläche vor dem Fokus des Laserstrahls angeordnet wird.

4. Verfahren nach Anspruch 1, bei dem
die zu bearbeitende Oberfläche mit dem Laserstrahl abgescant wird.

5. Verfahren nach Anspruch 4, bei dem
als Profil der auf die zu bearbeitende Oberfläche gerichteten Laserstrahlung ein Tophat-Profil eingestellt wird.

## Claims

1. Method for finely polishing/structuring thermosensitive dielectric material with laser radiation, wherein
intense ultrashort laser pulses are directed at a surface of the material being processed, and
the action time of the laser pulses on the surface is in a range between 10⁻¹³ sec and 10⁻¹¹ sec, and the fluence of the laser pulses is set below the fluence threshold, which would be necessary for the ablation of the material, but is sufficient to provoke a Coulomb explosion.

2. Method according to claim 1, wherein
the fluence of the laser radiation on the surface being processed is set at between 70% and 95% of the fluence threshold.

3. Method according to claim 2, wherein
the surface being processed is arranged in front of the focus of the laser beam.

4. Method according to claim 1, wherein
the surface being processed is scanned with the laser beam.

5. Method according to claim 4, wherein
a top hat profile is set as the profile of the laser radiation directed at the surface being processed.

## Revendications

1. Procédé de polissage fin/structuration fine d'une matière diélectrique thermosensible au moyen d'un rayonnement laser, dans lequel des impulsions laser ultra-courtes intensives sont dirigées sur une surface à usiner et dans lequel le temps d'action des impulsions laser sur la surface est réglé dans la plage de 10⁻¹³ s à 10⁻¹¹ s, et la fluence des impulsions laser est réglée au-dessous de la fluence de seuil qui serait nécessaire pour une ablation de la matière, mais suffisamment pour l'apparition d'une explosion de Coulomb.

2. Procédé selon la revendication 1, dans lequel
la fluence du rayonnement laser sur la surface à usiner est réglée entre 70% et 95% de la fluence de seuil.

3. Procédé selon la revendication 2, dans lequel
la surface à usiner est disposée devant le foyer du faisceau laser.

4. Procédé selon la revendication 1, dans lequel
la surface à usiner est balayée par le faisceau laser.

5. Procédé selon la revendication 4, dans lequel,
comme profil du rayonnement laser dirigé sur la surface à usiner, on règle un profil en chapeau haut-de-forme.
